# EUROPEAN PATENT APPLICATION

(11) **EP 4 831 632 A1**
(43) Date of publication of application: **28.10.2026**
(21) Application number: 25172624.6
(22) Date of filing: 25.04.2025
(51) Int. Cl.: G01N 30/54, G01N 30/60, G01N 30/72, G01N 30/88

(54) **ANALYTICAL CHROMATOGRAPHY COLUMN HEATER ASSEMBLY**

(71) Applicant: Evosep ApS, 5230 Odense M (DK)
(72) Inventor: FALKENBY, Lasse, 5230 Odense M (DK)
(74) Representative: COPA Copenhagen Patents

(57) **Abstract**

The present disclosure relates to a column heater socket and cartridge for use in high-performance liquid chromatography-mass spectrometry, HPLC-MS, systems. The column heater socket comprises a heating device with a receptacle made from a thermally conductive material, featuring a channel designed to accommodate the chromatography column of a column emitter unit. The heating device, thermally connected to the receptacle, distributes heat to the column. The column heater cartridge includes a column emitter unit with a chromatography column and an electrospray emitter along with a voltage source for applying electrospray voltage, facilitating direct emission of ionized eluates at the electrospray interface of the HPLC-MS system.

## Description

### TECHNICAL FIELD

The present disclosure relates to liquid chromatography (LC) systems, specifically concerning the thermal management of capillary liquid chromatographic columns.

### BACKGROUND

High-performance liquid chromatography (HPLC) and Ultra-(high)-performance liquid chromatography (U(H)PLC) are powerful techniques used in analytical chemistry to separate, identify, quantify, and/or purify compounds or analytes in samples. A sample, containing different analytes, is separated in time and space by passing the sample through a chromatography column using a mobile phase comprising one or more solvents. After elution from the chromatographic column, the different analytes may be ionized by high voltage potential difference and subsequently qualitatively and/or quantitatively detected using e.g. mass spectrometry (MS) or spectrophotometry.

Liquid chromatography systems have widespread use in e.g. hospitals and clinical laboratories in analysis of biological samples, such as plasma or urine. For example, HPLC has found use in monitoring therapeutic drug concentrations, performing toxicological screening for poisons and drugs of abuse or for identification and quantification of hormones, vitamins, peptides, or proteins for diagnostic purposes.

The retention times of analytes are significantly influenced by temperature variations, making it important to have a consistent and controlled column temperature. Existing technologies for managing the temperature of a chromatographic column typically involve a column heater, which can maintain a stable LC performance amid fluctuating ambient temperature conditions. There are predominantly two types of column heater designs on the market today: integrated designs and discrete heater units.

Integrated designs offer the advantage of simplicity, where the column, heater, and emitter are combined into a single unit. They provide ease of operation as the high voltage from the mass spectrometer is applied automatically upon insertion into the ion source. However, these designs suffer from drawbacks, such as being single use, involving high unit costs, and being dependent on a limited number of suppliers. Additionally, the development cycle for new columns or emitters is lengthy and exclusively controlled by the suppliers.

On the other hand, discrete heater units provide greater flexibility, allowing users to select columns from various vendors and arrange them within the heater structure. While this approach offers customization, it is not user-friendly, often requiring expert knowledge to achieve consistent results. Furthermore, these heaters tend to be bulky to ensure sufficient heat transfer and voltage isolation, complicating their placement in front of the ion inlet of the mass spectrometer. The high voltage shielding in these designs is frequently inadequate, posing potential safety risks.

Thus, there is a need for improved solutions that offer both the ease of use found in integrated designs and the flexibility of discrete units, without the associated inefficiencies and limitations.

### SUMMARY

On this background, it may be seen as an object of the present disclosure to provide a column heater assembly with enhanced user-friendliness, effective insulation against high voltage, and efficient heat transfer. One or more of these objects may be met by aspects of the present disclosure as described in the following.

A first aspect of the present disclosure relates to a column heater socket for use with a column heater cartridge according to a second aspect of the present disclosure in a high-performance liquid chromatography-mass spectrometry, HPLC-MS, system, the column heater socket comprising a heating device configured for heating the chromatography column of the column heater cartridge. The heating device includes a receptacle comprising, preferably consisting essentially of, a first material. The receptacle further comprises a channel configured for receiving at least the chromatography column of the column emitter unit. The first material is a thermal conductor. The heater is arranged in thermal connection with the receptacle so that when the heater heats the first material of the receptacle, the receptacle distributes heat from the heater to the chromatography column. This configuration of separating the column heater components in a socket and a cartridge provides for a modular arrangement that ensures a stable and controlled temperature environment for the chromatography column, improving analyte retention and separation efficiency while addressing the need for effective heat management in HPLC-MS systems. The column heater socket can thus be used with multiple column heater cartridges that can be replaced if the chromatography column is worn out, allowing the heating device to be reused without requiring labour-intensive disassembly and replacement of parts but an easily implemented swapping of cartridges.

Additionally, the channel of the receptacle may be shaped to receive the column emitter unit of the column heater cartridge, preferably in a form-fitting manner, to provide a good heat transfer from the receptacle to the chromatography column. For example, the channel may comprise a column portion shaped to receive the chromatography column and, optionally also, the electrospray emitter of the column emitter unit, and a fitting portion shaped to receive the first fitting. As these components of the column emitter unit vary in diameter, the width of the column portion and the fitting portion differs, e.g. the width of the fitting portion is larger than the width of the column portion.

Additionally or alternatively, the column heater socket may comprise a first attachment portion configured to cooperate with the first attachment portion of the column heater cartridge to establish a detachable socket-cartridge attachment. When the detachable socket-cartridge attachment is established, at least the chromatography column of the column emitter unit may be received in the channel of the receptacle. The detachable socket-cartridge attachment may be tool-free, such as via quick-release, snap-fit, a latch mechanism, friction-fit, a bayonet mount, but most preferably magnetically. Preferably, the detachable socket-cartridge attachment is a magnetically detachable attachment.

Additionally or alternatively, the detachable socket-cartridge attachment may be configured to be established by arranging, e.g. placing or moving, the column heater cartridge on the column heater socket in a transverse direction, e.g., a perpendicular direction, to the column axis of the column heater cartridge. This arrangement facilitates easy and secure attachment while protecting the fragile column emitter unit of the column heater cartridge, enhancing operational efficiency. Additionally or alternatively, the column heater socket may comprise a second attachment portion configured for being attached to a mass spectrometer of the HPLC-MS-system or, preferably, cooperating with the second attachment portion of a column heater base to establish a socket-base attachment, preferably a detachable attachment. This feature enhances integration and flexibility in system design.

Additionally or alternatively, the channel may be further configured for receiving the first fitting of the column heater cartridge. As the fitting can be made more robust than the often-fragile chromatography column, receiving the fitting in the channel allows for a more safe and secure arrangement of the chromatography column in the receptacle as well as alignment in the channel. Additionally or alternatively, the first material may have a thermal conductivity of at least 0.35 W m⁻¹ K⁻¹ @ 25C° and an electrical resistivity of at least 10³ Ω·m. The specified thermal and electrical properties contribute to efficient heat transfer to the chromatography column and voltage insulation from the electrospray voltage, ensuring both performance and safety in the operation of the column heater socket. Also, when the electrospray voltage is applied to the electrospray emitter via the first fitting, the first fitting is advantageously received in the channel as the electrical resistivity of the receptacle material can electrically isolate the high voltage of the first fitting from the exterior. The thermal conductivity is, in order of increasing preference, at least 0.40 W m⁻¹ K⁻¹ @ 25C°, 0.45 W m⁻¹ K⁻¹ @ 25C°, 0.50 W m⁻¹ K⁻¹ @ 25C°, or most preferable at least 0.55 W m⁻¹ K⁻¹ @ 25C°. The electrical resistivity, i.e., the volume electrical resistivity, can be determined by ASTM D257-14 and may be in order of increasing preference at least 10³ Ω·m, 10⁴ Ω·m, 10⁵ Ω·m, 10⁶ Ω·m, 10⁷ Ω·m, 10⁸ Ω·m, 10⁹ Ω·m, 10¹⁰ Ω·m, 10¹¹ Ω·m, 10¹² Ω·m, 10¹³ Ω·m, or most preferably at least 10¹⁴ Ω·m.

Additionally or alternatively, the first material may be a composite material, such as a material comprising one or more polymer constituents and a macroscopically identifiable filler constituent. The first material is preferably a ceramic alumina material, preferably being mouldable and/or printable, such as Rigid 10K resin provided by Formlabs. The first material may comprise, or consist of, urethane dimethacrylate in an amount of 15-25% of the resin, isobornyl methacrylate in an amount of 7-10% of the resin, a glass filler in an amount of 55-75% of the material.

Additionally or alternatively, the column heater socket may further comprise a frame supporting the heating device, wherein the frame is configured for cooperating with the housing of the column heater cartridge to shield, preferably electrically, the voltage source and the column emitter unit from the exterior. This configuration enhances safety and operational reliability.

Additionally or alternatively, the frame may comprise a first frame part supporting the heating device, and a second frame part including the second attachment portion, optionally a circuit, e.g., a printed circuit board, and a first electrical interface portion configured for cooperating with the first electrical interface portion of the column heater base. The first frame part and the second frame part may be detachably attached, providing flexibility and ease of assembly. For example, the first frame part may be exchanged to provide a different sized heating device accommodating other dimensions of column emitter units.

Additionally or alternatively, the receptacle may be permanently affixed to the column heater socket. As an alternative, the receptacle may be detachably attached to the column heater socket, preferably so as to allow exchanging thereof. This configuration allows the column heater socket to accommodate cartridges having different sized column emitter units having, for example, different diameters or different fittings. Thereby, the user can easily exchange the receptacle sized for a particular column emitter unit with another receptacle sized for a different column emitter unit. This increases the flexibility of the system.

Additionally or alternatively, the receptacle may be integrally manufactured of the first material. An integrally manufactured receptacle may provide good heat transfer and effective voltage isolation. Additionally or alternatively, the receptacle may be additively manufactured of the first material. Additive manufacturing (also known as 3D printing) of the receptacle enables precise customization, allowing for tailored designs enabling the user to source column emitter units from various vendors and quickly provide a corresponding receptacle. As an alternative, the receptacle may be moulded, for example, via injection moulding allowing for cost-effective production of large volumes.

Additionally or alternatively, the heating device may comprise a temperature sensor configured for, when the chromatography column is received in the channel, sensing a temperature of the chromatography column, and wherein the heating device is configured for maintaining the chromatography column within a predefined temperature range based on the sensed temperature of the temperature sensor. This design ensures precise temperature regulation, enhancing the reproducibility and reliability of chromatographic analyses by minimizing temperature-induced variations in retention times.

The second aspect of the present disclosure relates to a column heater cartridge for use with a column heater socket according to the first aspect of the present disclosure in a high-performance liquid chromatography-mass spectrometry, HPLC-MS, system. The column heater cartridge comprises a column emitter unit extending along a column axis and includes a chromatography column and an electrospray emitter. The chromatography column has an inlet for receiving eluent. The chromatography column may be a single chromatography column, and the column heater cartridge may not include further columns. The electrospray emitter comprises an emitter end for emitting ionized eluates. A voltage source is configured to apply an electrospray voltage to the electrospray emitter for ionizing eluates. The emitter end of the electrospray emitter is configured for being arranged at an electrospray interface of the HPLC-MS system. The chromatography column and the electrospray emitter are in direct communication so that, during operation of the HPLC-MS system, eluates from the chromatography column are emitted from the emitter end of the electrospray emitter at the electrospray interface. This integrated design minimizes dead volume, enhances ionization efficiency, and improves sensitivity for mass spectrometry detection, addressing the drawbacks of existing designs. The chromatography column may preferably be a nano liquid chromatography (nanoLC) column. Such nanoLC columns typically have inner diameters in the range of 10-150 µm.

Additionally or alternatively, the column heater cartridge may comprise a first attachment portion configured to cooperate with the first attachment portion of the column heater socket to establish a socket-cartridge attachment, preferably a detachable attachment. This feature facilitates easy assembly and disassembly, improving operational flexibility.

Additionally or alternatively, the column emitter unit may comprise a first fitting attached to the inlet of the chromatography column. The first fitting may be electrically conductive, for example, the first fitting may comprise a metallic material. The voltage source may be configured for applying the electrospray voltage to the electrospray emitter via the first fitting. This configuration ensures a reliable pathway for voltage application, maintaining consistent electrospray performance and enhancing analytical accuracy.

Additionally or alternatively, the voltage source may comprise a high voltage pin arranged in electrical connection with the electrospray emitter, preferably via the first fitting. The high voltage pin facilitates secure electrical connectivity, ensuring stable and efficient ionization conditions and contributing to improved mass spectrometric analysis. The voltage source may be supplied with voltage via a second electrical interface portion of the column heater socket. In turn, the second electrical interface portion of the column heater socket may be supplied by the first electrical interface portion of the column heater base configured for being connected to a power supply.

Additionally or alternatively, the column heater cartridge may comprise a housing including the column emitter unit and a cavity configured for receiving the receptacle of the column heater socket. The column emitter unit is supported by the housing and extends through the cavity along the column axis, wherein the emitter end of the electrospray emitter extends beyond the housing. This structural design supports the emitter unit while ensuring optimal alignment and integration within the HPLC-MS system, enhancing operational efficiency and ease of use.

Additionally or alternatively, the housing may comprise, or consist essentially of, a second material different from the first material. The second material may be a polymer, such as polyamide, e.g. PA11 or PA12, PEEK, PPS, TPA, PVDF or PC. This configuration allows for the use of materials with properties suited to specific functional requirements, such as electrical insulation or thermal management. Preferably, the second material is a polyamide, such as PA12, as such material provides a good combination of low moisture absorption, high strength and durability, good chemical and heat resistance, a smooth surface finish as well as high dielectric strength and resistivity.

Additionally or alternatively, the second material may be an electrical insulator, preferably having an electrical resistivity of at least 10³ Ω·m, 10⁴ Ω·m, 10⁵ Ω·m, 10⁶ Ω·m, 10⁷ Ω·m, 10⁸ Ω·m, 10⁹ Ω·m, 10¹⁰ Ω·m, 10¹¹ Ω·m, 10¹² Ω·m, 10¹³ Ω·m, or most preferably at least 10¹⁴ Ω·m, and/or a thermal insulator, preferably having a thermal conductivity of at most 0.40 W m⁻¹ K⁻¹ @ 25C°, preferably at most 0.35 W m⁻¹ K⁻¹ @ 25C°, or most preferably at most 0.30 W m⁻¹ K⁻¹ @ 25C°. This ensures protection against electrical and thermal interference, enhancing the safety and reliability of the system.

Additionally or alternatively, the housing may comprise a first housing part and a second housing part, wherein the first housing part is attached, preferably detachably, and more preferably as a fastened detachable attachment requiring a tool for attachment and/or detachment, to the second housing part and thereby securing the column emitter unit, preferably the first fitting, to the housing. The attachment between the first housing part and the second housing part may optionally use a tamper-proof attachment. In the context of the present disclosure, the term "tamper-proof attachment" may be understood as an attachment that cannot be separated without specialized tools, irreversible damage, or visible signs of tampering. The first and second housing parts may comprise, or consist essentially of, the second material, respectively.

Additionally or alternatively, the housing may comprise a support portion supporting a tip portion of the column emitter unit adjacent to the emitter end of the electrospray emitter. The support portion may support the tip portion in a removable manner allowing the column emitter unit to be removed from the support portion. For example, the support portion may comprise a notch wherein the tip portion of the column emitter unit is supported. The support portion may be a protrusion extending from a floor of the cavity to the tip portion of the column emitter unit. The first fitting of the column emitter unit may be attached to the housing and the column emitter unit may freely extend, i.e., spanning without support, from the attachment of the first fitting, through or across the cavity to the support portion. Further, the channel of the receptacle of the column heater cartridge may comprise an intermediate portion so as to accommodate the support portion when the column heater socket-cartridge attachment is established.

Additionally or alternatively, the chromatography column and the electrospray emitter may form part of an integrated emitter column. This design minimizes dead volume, enhances ionization efficiency, and improves sensitivity for mass spectrometry detection. An integrated emitter column may be understood as a single-piece column with a built-in emitter. As an alternative, the chromatography column and the electrospray emitter can be provided as separate components attached together, for example, via a second fitting.

Additionally or alternatively, the column heater cartridge may comprise a readable memory unit configured for storing information related to identification and/or properties of the column emitter unit, preferably wherein the identification information uniquely distinguishes the column emitter unit from another column emitter unit, such as a serial or batch number. The properties information can include information related to the dimensions of the chromatography column, the stationary phase, the desired temperature range of the chromatography column, the desired flow rate, desired electrospray voltage, and so on. The memory unit allows for tracking and identification of the column emitter, facilitating inventory management and system compatibility. Consequently, the column heater socket may comprise means for reading and/or writing to the memory unit, such as an electrical connector.

Additionally or alternatively, the memory unit may be configured to store usage information associated with the column emitter unit, and wherein the memory unit is preferably writable to update the stored usage information over time. The usage information includes at least one of cumulative operational time, wear level, or estimated remaining lifespan of the column emitter unit. This feature enables monitoring of component lifecycle and performance, aiding in maintenance planning and system optimization.

A third aspect of the present disclosure relates to a column heater base for use with a column heater socket according to the first aspect of the present disclosure and a column heater cartridge according to the second aspect of the present disclosure in a high-performance liquid chromatography-mass spectrometry, HPLC-MS, system. The column heater base comprises a second attachment portion configured to couple with the second attachment portion of the column heater socket to establish a socket-base attachment, and a third attachment portion configured for attaching, optionally via a fastener connection, the column heater base to a mass spectrometer of the HPLC-MS system. The column heater base provides a well-defined interface for the column heater socket and thus also the column heater cartridge, which allows the user to adjust the relative position of the column heater base and the mass spectrometer so that once the column heater base receives the column heater socket and column heater cartridge, the emitter end of the electrospray emitter is arranged substantially at the electrospray interface of the mass spectrometer. Furthermore, the detachable attachment between the column heater base and the column heater socket provides the ability to exchange the column heater socket to accommodate a wider range of column heater cartridges, such as having chromatography columns with differing lengths. For example, a first column heater socket can accommodate column heater cartridges having column lengths in a first range, for example, 3 to 10 cm, and a second column socket can accommodate column heater cartridges having column lengths in a second range, different from the first range, for example, 10 to 20 cm. The lower end point of the first range may be lower than the lower end point of the second range, and/or the upper end point of the first range may be lower than the upper end point of the second range. In the context of this disclosure, the mention of a "second" element, such as a "second attachment portion", does not imply the presence of a "first" element. For the attachment portions mentioned in this disclosure, the ordinal number is intended to describe that the element corresponds to the element of the same ordinal number of a different part, for example, the second attachment portion of the column heater socket can cooperate with the second attachment portion of the column heater base.

Additionally or alternatively, the column heater socket-base attachment may be a detachable attachment, such as the second attachment portion of the column heater base being one of a receiving section and an insertion section, and the second attachment portion of the column heater socket being the other one of the receiving section and the insertion section. The second attachment portion of the base preferably being the receiving section and the second attachment portion of the column heater socket being the insertion portion. For example, the second attachment portion of the column heater base may comprise a groove cooperating with a guide of the second attachment portion of the column heater socket. This design facilitates easy integration and removal, enhancing system flexibility and user convenience.

Additionally or alternatively, the column heater base may further comprise a first electrical interface portion configured to cooperate with the first electrical interface portion of the column heater socket to establish an electrical connection when the column heater socket-base attachment is established. The electrical connection is configured to transfer power to/from the heating device, and/or configured to transfer data to/from the memory unit and/or circuit.

Additionally or alternatively, the electrical connection may be further configured for, when the column heater socket-cartridge attachment is additionally established, supplying the voltage source of the column heater cartridge. This arrangement ensures reliable, safe and convenient power delivery.

A fourth aspect of the present disclosure relates to a column heater assembly for use in a high-performance liquid chromatography-mass spectrometry, HPLC-MS, system, comprising a column heater socket according to the first aspect of the present disclosure and a column heater cartridge according to the second aspect of the present disclosure. The assembly provides a comprehensive solution for temperature control and ionization, enhancing the analytical capabilities of HPLC-MS systems and addressing the limitations of existing solutions. In some other embodiments, the column heater cartridge may be permanently affixed to the column heater socket. In such embodiments, the column heater socket and column heater cartridge are instead a first portion and a second portion of the column heater assembly, respectfully, but with the same features as described for the column heater socket and cartridge. In the context of the present disclosure, the term "permanently affixed" may be understood as a connection that prevents disassembly without causing irreversible damage to at least one of the connected sections or parts. As a non-limiting example of the term permanently affixed, the receptacle of the column heater socket and the housing of the column heater cartridge may be integrally moulded in one piece, for example, of the first material. However, it is considered more advantageous that the column heater socket-cartridge attachment is detachable.

Additionally or alternatively, the column heater assembly may further comprise a column heater base according to the third aspect of the present disclosure. This feature enhances the modularity and ease of integration of the column heater assembly within the HPLC-MS system, providing versatility and adaptability in system design and operation.

A fifth aspect of the present disclosure relates to a kit of parts for use in a high-performance liquid chromatography-mass spectrometry, HPLC-MS, system, the kit of parts comprising a plurality of column heater cartridges according to the second aspect of the present disclosure including at least a first column heater cartridge and a second column heater cartridge. The column emitter unit of the first column heater cartridge is different from the column emitter unit of the second column heater cartridge. Preferably, the chromatography column of the first column heater cartridge is different from the chromatography column of the second column heater cartridge. The kit provides versatility and adaptability, enabling users to customize their HPLC-MS systems for different analytical tasks and improve operational efficiency.

Additionally or alternatively, the kit of parts may comprise a column heater socket according to the first aspect of the present disclosure, wherein the first attachment portion of each one of the plurality of column heater cartridges is configured to interchangeably establish the column heater socket-cartridge attachment. This allows for quick and easy interchange of column heater cartridges, improving operational efficiency and flexibility in analytical processes.

Additionally or alternatively, the kit of parts may comprise a column heater base according to the third aspect of the present disclosure. This addition further provides multiple modular components within the HPLC-MS system, enhancing system versatility and user convenience.

A sixth aspect of the present disclosure relates to a high-performance liquid chromatography-mass spectrometry, HPLC-MS, system, comprising a column heater assembly and a mass spectrometer having an electrospray interface, wherein an emitter end of the electrospray emitter is arranged at the electrospray interface of the mass spectrometer. This system configuration optimizes the interface between the column heater assembly and the mass spectrometer, enhancing analytical sensitivity and accuracy and addressing the need for improved integration and performance in HPLC-MS systems.

Additionally or alternatively, the system may further comprise a sample injector, such as an autosampler, connected to the inlet of the chromatography column, optionally via the first fitting. The inclusion of a sample injector streamlines the introduction of samples into the chromatography column, increasing throughput and automation in analytical processes. This integration enhances system efficiency, reduces manual intervention, and ensures consistent sample handling.

A person skilled in the art will appreciate that any one or more of the above aspects of this disclosure and embodiments thereof may be combined with any one or more of the other aspects of this disclosure and embodiments thereof.

### BRIEF DESCRIPTION OF THE DRAWINGS

Embodiments of this disclosure will be described in more detail in the following with regard to the accompanying figures. The figures show one way of implementing the present invention and are not to be construed as being limiting to other possible embodiments falling within the scope of the attached claim set.
Fig. 1 is an exploded view of the column heater assembly, illustrating the primary components and their interconnections.
Fig. 2A is a schematic perspective view of the column heater socket, highlighting the internal structure, including the heating device, receptacle, and frame components.
Fig. 2B is a schematic perspective view of the heating device, focusing on the channel configuration and attachment portions.
Fig. 3A is a schematic perspective view of a first frame part of the column heater socket, showing the first attachment portion and the second electrical interface portion.
Fig. 3B is a schematic perspective view of the column heater cartridge, showing the column emitter unit and the housing.
Fig. 4 is a schematic perspective view of the column heater base, depicting the attachment portions.
Fig. 5 is a schematic perspective view of the kit of parts, showing multiple column heater cartridges and column heater sockets accommodating different column emitter units.
Fig. 6 is a schematic diagram of the high-performance liquid chromatography-mass spectrometry, HPLC-MS, system, showing the integration of the column heater assembly with the mass spectrometer and sample injector.

### DETAILED DESCRIPTION

In the following figure description, the same reference numbers refer to the same elements and may thus not be described in relation to all figures.

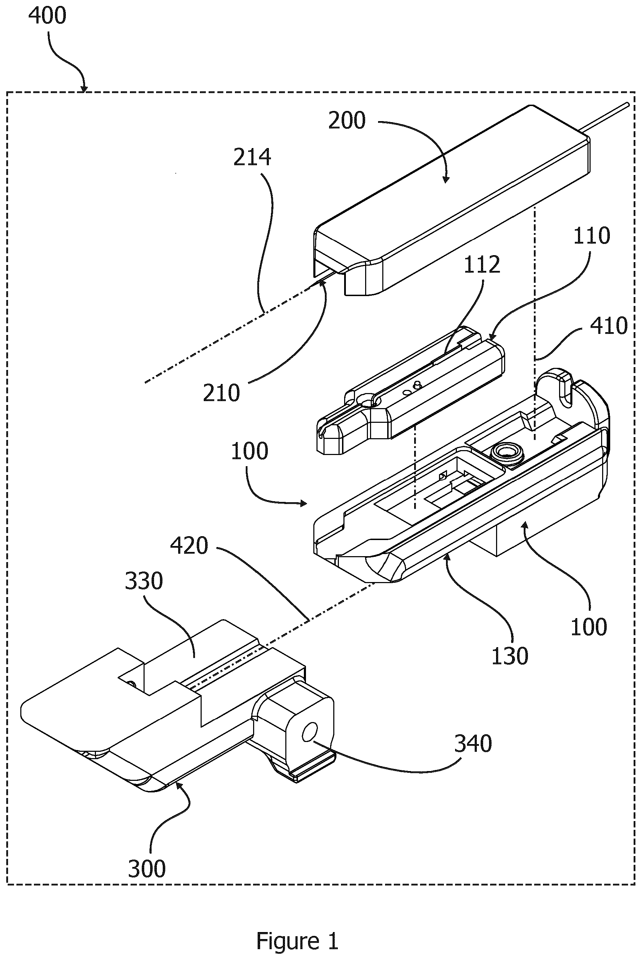

Fig. 1 shows an exploded view of a column heater assembly 400 for high-performance liquid chromatography-mass spectrometry, HPLC-MS, systems. The column heater assembly 400 comprises a column heater socket 100, a column heater cartridge 200, and a column heater base 300. The column heater cartridge 200 comprises a column emitter unit 210 which is subject to wear and most often requires replacement. The column heater socket 100 comprises the heating device 110.

The connections between the various components are indicated by dash-dotted lines extending there in between. The column heater socket 100 comprises a heating device 110 illustrated with a dash-dotted line. Although it is, in principle, possible that this heating device 110 is attached in an exchangeable manner, it is presently preferred that the heating device 110 remains permanently fixed to the column heater socket 100.

The column heater socket 100 and column heater cartridge 200 are configured to attach to one another via a detachable socket-cartridge attachment 410 (described in more detail below). This allows an operator to easily and quickly exchange the column heater cartridge 200, for example when the column emitter unit of the column heater cartridge is worn out or a different column emitter unit, e.g. with a different stationary phase, or different diameter, is required for a particular chromatography run. The column heater cartridge 200 is attached by moving the column heater cartridge in a direction transverse to the column axis 214 as indicated by the dash-dotted line, e.g. perpendicularly, to the column heater socket 100 so that the column emitter unit 210 is received in a channel 112 of the heating device 110 of the column heater socket 100.

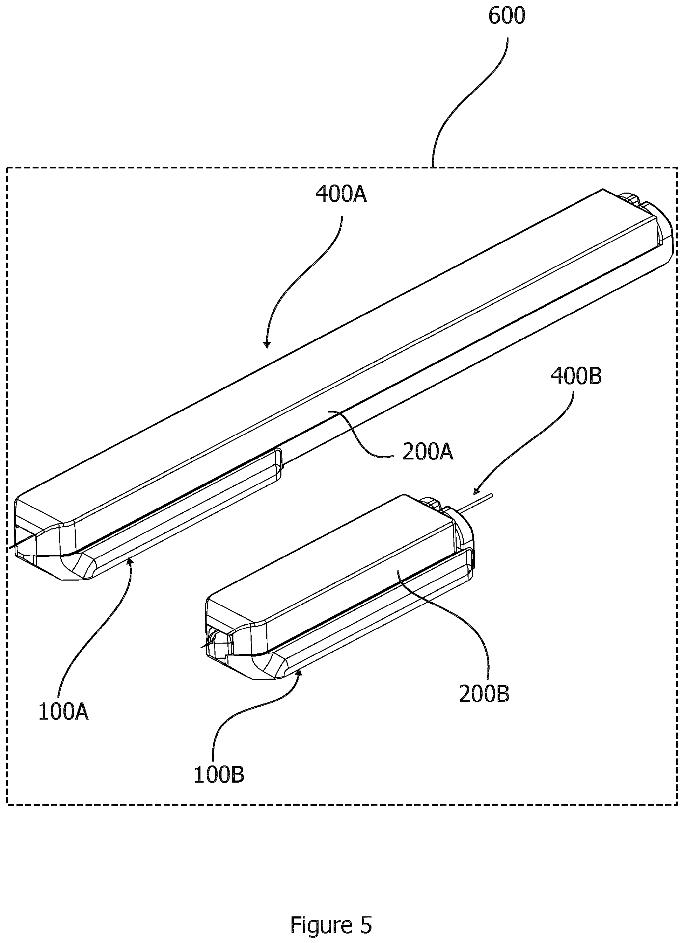

Furthermore, the column heater socket 100 and the column heater base 300 are also configured to attach to one another via a detachable socket-cartridge attachment 420 (described in more detail below). This allows an operator to easily and quickly exchange both the column heater socket 100 and the column heater cartridge 200, for example if a different column emitter unit, e.g. with a larger length, is desired for a particular analytical run. An example of this is described in connection with Figure 5.

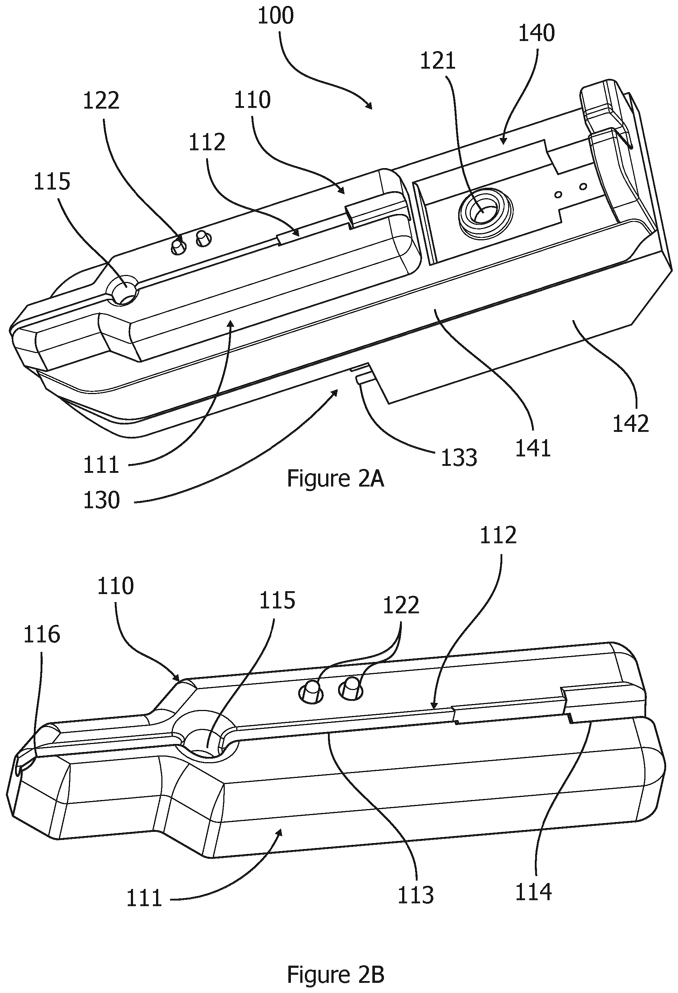

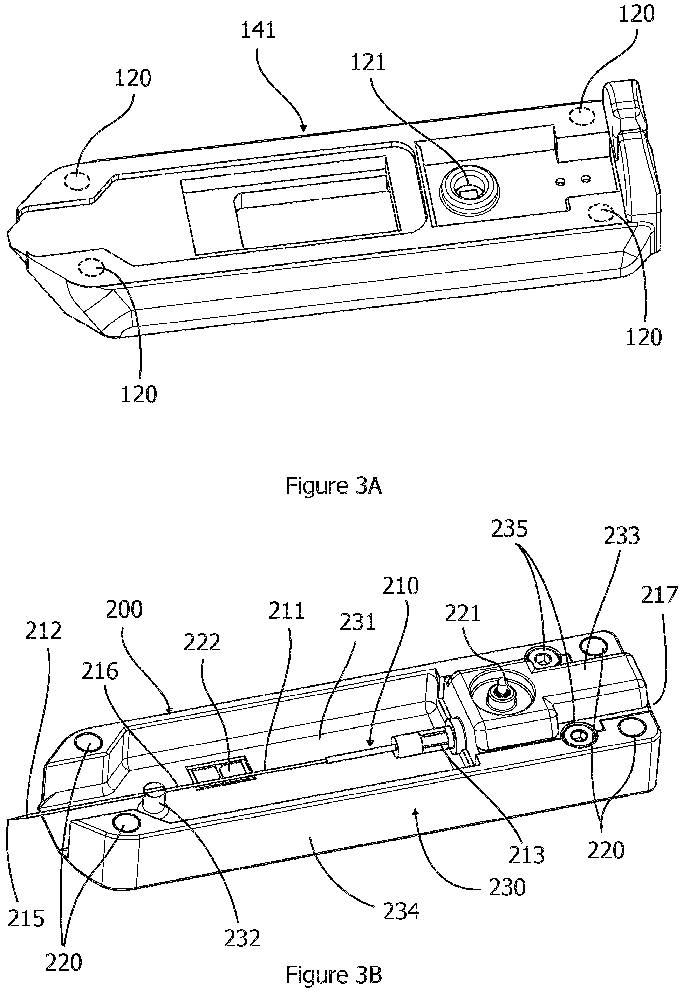

Fig. 2A shows the column heater socket 100 in greater detail. As mentioned, the column heater socket 100 comprises the heating device 110. The heating device 110 is configured for heating the column emitter unit 210, which is best seen in Fig. 3B, in particular the chromatography column thereof, of the column heater cartridge 200 when the column heater socket-cartridge attachment 410 is established as illustrated in Fig. 1. Turning to Fig. 2B, the heating device 110 includes a receptacle 111. The receptacle 111 further comprises a channel 112 shaped to receiving the column emitter unit 210 in a form-fitting manner so as provide a good heat transfer from the receptacle to the chromatography column. Accordingly, the channel 112 comprises a column portion 113 shaped to receive the chromatography column 211 and the electrospray emitter 212 of the column emitter unit 210 (best seen in Fig. 3B), and a fitting portion 114 shaped to receive the first fitting 213 (best seen in Fig. 3B). As these components of the column emitter unit 210 can vary in dimensions, e.g. length and diameter, the corresponding width of the column portion 113 and the fitting portion 114 differs, e.g. the width of the fitting portion is larger than the width of the column portion, so as to fit the shape of the corresponding components of the column emitter unit 210. Further, the channel 112 comprises an intermediate portion 115 so as to accommodate a support portion 232 (best seen in Fig. 3B) when the column heater socket-cartridge attachment 410 is established.

In the present embodiment, the receptacle 111 is permanently affixed to the first frame part 141 of the column heater socket 100. However, as an alternative, the receptacle may instead be detachably attached to the column heater socket, preferably so as to allow exchanging thereof.

The receptacle 111 is formed integrally in one piece of a first material, e.g. by additive manufacturing. This allows the channel 112 to be shaped to fit the column emitter unit 210 in a form-fitting fashion. The first material is Rigid 10K resin provided by Formlabs. This material is a composite material comprising, or consisting of, urethane dimethacrylate in an amount of 15-25% of the resin, isobornyl methacrylate in an amount of 7-10% of the resin, a glass filler in an amount of 55-75% of the material. The first material has a thermal conductivity of around 0.621 W m⁻¹ K⁻¹ @ 25C° and an electrical resistivity of at least 10³ Ω·m. However, it is currently believed that a material having a thermal conductivity of at least 0.35 W m⁻¹ K⁻¹ @ 25C° and an electrical resistivity of at least 10³ Ω·m is sufficient.

The heating device 110 further comprises a heater (not shown) arranged in thermal connection with the receptacle 111 so that when the heater heats the first material of the receptacle 111, the receptacle distributes heat from the heater to the chromatography column 211 (best seen in Fig. 3B). The column heater socket 100, in particular the heating device 110, can thus be used with different column heater cartridges 200 that can be replaced and/or exchanged, e.g. if the column emitter unit 210 is worn out, allowing the heating device 110 to be reused by an easily implemented exchanging of column heater cartridges 200.

Furthermore, the heating device 110 comprises a temperature sensor (not shown) configured for sensing a temperature of the chromatography column 211 when the chromatography column 211 is received in the channel 112. The heating device 110 is configured for maintaining the chromatography column 211 within a predefined temperature range based on the sensed temperature of the temperature sensor.

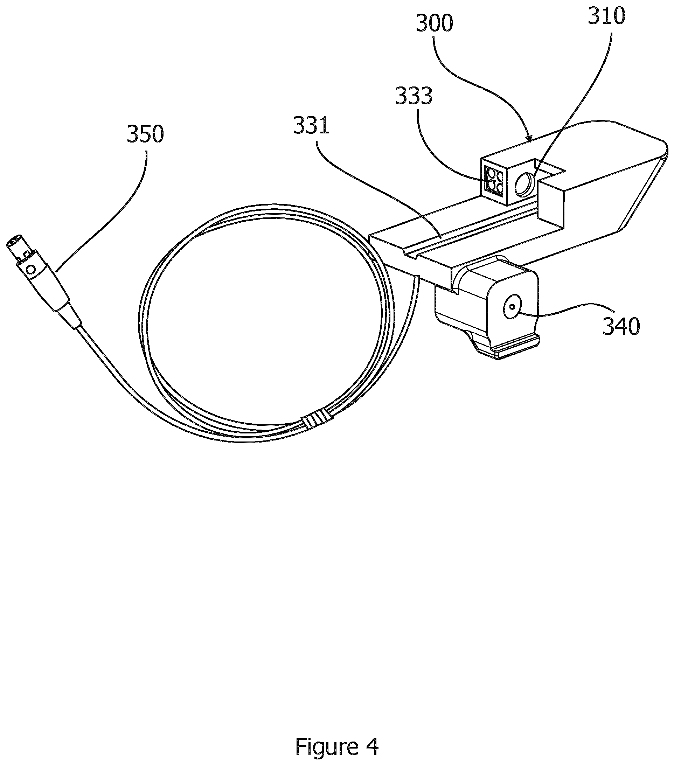

The column heater socket 100 comprises a frame 140 supporting the heating device 110. The frame 140 is configured for cooperating with a housing 230 (best seen in Fig. 3B) of the column heater cartridge 200 to form an enclosure to electrically shield the voltage source 221 and the column emitter unit 210 from the exterior. As shown in Fig. 2A, the frame 140 comprises a first frame part 141 and a second frame part 142. The first frame part supports the heating device 110 and includes a second electrical interface portion 121 configured for cooperating with the voltage source 221 of the column heater cartridge 200 (best seen in Fig. 3B). The second frame part 142 includes a second attachment portion 130 (described in more detail below) and a first electrical interface portion 133 configured for cooperating with a first electrical interface portion 333 of the column heater base 300 (best seen in Fig. 4). The first frame part 141 and the second frame part 142 are detachably attached, providing flexibility and ease of assembly. This allows, for example, the first frame part 141 to be exchanged to provide a different sized heating device 110 accommodating other dimensions of column emitter units 210.

Turning to Fig. 3A, the column heater socket 100 comprises a first attachment portion 120 configured to cooperate with the first attachment portion 220 of the column heater cartridge (best seen in Fig. 3B) to establish a detachable socket-cartridge attachment 410 (best seen in Fig. 1). When the detachable socket-cartridge attachment 410 is established, the column emitter unit 210 is received in the channel 112 of the receptacle 111. The detachable socket-cartridge attachment 410 is configured as a tool-free magnetic detachable attachment provided by a plurality of first permanent magnets 120, in the present embodiment four, distributed around the circumference of the first frame part 141 and a corresponding plurality of second permanent magnets 220 distributed around the circumference of the housing 230 so that a pair of first and second permanent magnets engage when the column heater cartridge 200 is placed on the column heater socket 100 perpendicularly to the column axis 214 as shown in Fig. 1. Although this magnetic engagement is preferred due to its simplicity of use, other ways of establishing the socket-cartridge attachment 410 exist as described above.

Turning to Fig. 3B, the column heater cartridge 200 is shown in greater detail. The column heater cartridge 200 comprises the column emitter unit 210 which is of the integrated column-emitter type. The column emitter unit 210 extends along a column axis 214 and includes, along the column axis 214, an inlet 217, a first fitting 213, the single nano chromatography column 211 and an electrospray emitter 212 with an emitter end 215. The inlet 217 is configured for receiving eluent. The emitter end 215 is for emitting ionized eluates and is configured for being arranged at an electrospray interface 511 of a HPLC-MS system 500 as seen in Fig. 5. Returning to Fig. 3B, the column heater cartridge 200 further comprises a housing 230 defining a cavity 231 and supporting the column emitter unit 210. The housing comprises a first housing part 233 including a cradle (not shown) for the first fitting 213 and a second housing part 234 cooperating with the first housing part 233 so that when the second housing part 234 is fastened to the first housing part 233, e.g. via a tamper-proof bolted connection 235, the first fitting 213 and thereby the column emitter unit 210 is secured to the column heater cartridge 200. The first and second housing parts 233, 234 consist essentially of a second material, different from the first material, that is a thermal and electrical insulator.

The housing 230 further comprises the support portion 232 supporting a tip portion 216 of the column emitter unit 210 adjacent to the emitter end 215 of the electrospray emitter 212. The support portion 232 has a protrusion extending from a floor of the cavity to the tip portion of the column emitter unit. The protrusion has a notch wherein the tip portion 216 of the column emitter unit 210 is supported. Thus, the column emitter unit 210 can be removed from the support portion 232. As seen, the column emitter unit 210 freely extends, i.e., spanning without support, from the attachment of the first fitting 213, through or across the cavity 231 to the support portion 232 and further, in a cantilevered fashion, from the support portion 232 to the emitter end 215. Thus, the emitter end 215 of the electrospray emitter 212 extends beyond the housing 230.

The first fitting 213 is attached to the inlet of the chromatography column and consists essentially of an electrically conductive metallic material. The first fitting 213 is further in direct electrical connection with the voltage source 221 in the form of a high voltage pin. Accordingly, when the voltage source 221 applies the electrospray voltage, this electrospray voltage is transferred via the first fitting 213, the chromatography column 211, to the emitter end 215 of the electrospray emitter 212.The high voltage pin 221 is supplied with voltage via the second electrical interface portion 121 of the column heater socket 100 (as best seen in Fig. 3A) when the socket-cartridge attachment 410 is established. The second electrical interface portion 121 of the column heater socket 100 is connected to the first electrical interface portion 133 of the column heater socket 100 (as best seen in Fig. 2A). In turn, the first electrical interface portion 133 of the column heater socket 100 is supplied by the first electrical interface portion 333 of the column heater base 300 (as best seen in Fig. 4), which is configured for being connected to a power supply.

Returning to Fig. 3B, the column heater cartridge 200 comprises a read/writeable memory unit 222 configured for storing information related to the identification, properties, and usage of the column emitter unit 210. The identification information uniquely distinguishes the column emitter unit from another column emitter unit, such as via a serial or batch number. The properties information can include information related to the dimensions of the chromatography column, the stationary phase, the desired temperature range of the chromatography column, the desired flow rate, desired electrospray voltage, and so on. The usage information includes at least one of cumulative operational time, wear level, or estimated remaining lifespan of the column emitter unit. Further, the memory unit 222 is writable to update the stored usage information over time. Consequently, the column heater socket 100 comprises means 122 for reading and/or writing to the memory unit, such as one or more electrical connector. The means are connected via the first electrical interface portions 133, 333 to the power/data cable 350 of the column heater base 300.

As described above in relation to Fig. 2A, the column heater socket 100 comprises the second attachment portion 130. The second attachment portion 130 is, in the present embodiment, in the form of an insertion section configured for cooperating with a second attachment portion 330 of a column heater base 300 to establish a detachable socket-base attachment 420 (as best seen in Fig. 1).

Turning to Fig. 4, the column heater base 300 is shown. As mentioned, the column heater base comprises the second attachment portion 330 in the form of a receiving section with a groove. Thus, a guide of the second attachment portion 130 of the column heater socket 100 is inserted into the groove of the second attachment portion 330 of the column heater base. When fully engaged, the second attachment portion 130 snaps into detachable engagement with the second attachment portion 330 to establish the socket-base attachment. Accordingly, the detachable socket-base attachment allows exchanging the column heater socket 100 to accommodate a wider range of column heater cartridges 200, such as having chromatography columns with differing lengths (as best seen in Fig. 5).

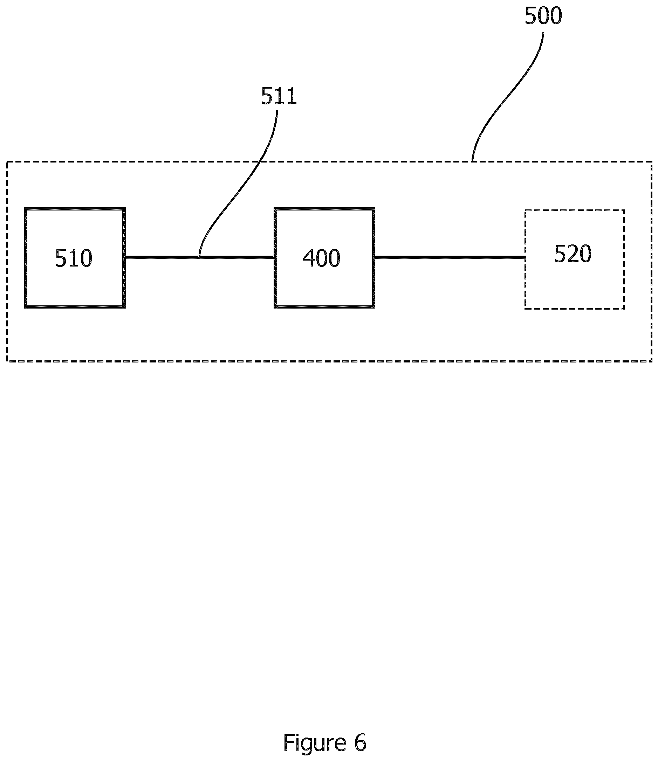

The column heater base 300 also comprises a third attachment portion 340 configured for attaching, optionally via a fastener connection, the column heater base 300 to a mass spectrometer 510 (only schematically shown in Fig. 6) of the HPLC-MS system 500. The column heater base 300 provides a well-defined interface for the column heater socket 100 and thus also the column heater cartridge 200, which allows the user to adjust the relative position of the column heater base 300 and the mass spectrometer 510 so that once the column heater base 300 receives the column heater socket 100 and the column heater cartridge 200, the emitter end 215 of the electrospray emitter 212 is arranged at the electrospray interface 511 of the mass spectrometer 510 (schematically shown in Fig. 6).

As mentioned, the column heater base 300 further comprises the first electrical interface portion 333 configured to cooperate with the first electrical interface portion 133 of the column heater socket 100 to establish an electrical connection when the socket-base attachment 420 is established. The electrical connection is configured to transfer power to/from the heating device 110, and for transferring data to/from the memory unit 222. The electrical connection also supplies, when the column heater socket-cartridge attachment is additionally established, the voltage source 221 of the column heater cartridge 200.

Turning to Fig. 5, a kit of parts 600 is shown. The kit of parts 600 comprises at least a first column heater cartridge 200A and a second column heater cartridge 200B. The column emitter unit of the first column heater cartridge 200A is different from the column emitter unit of the second column heater cartridge 200B. In the present embodiment, the chromatography column 211 of the first column heater cartridge 200A has a length of 3 to 10 cm while the chromatography column 211 of the second column heater cartridge 200B has a length of 10 to 20 cm. These lengths are merely exemplary and other ranges are envisaged. The first column heater cartridge 200A is attached, as described above, to a first column heater socket 100A, and the second column heater 200B is attached, also as described above, to a second column heater socket 100B. The second column heater socket 100B has a first frame part 141 (as best seen in Fig. 2A) with a longer length to accommodate the longer second column heater cartridge 200B. Likewise, the receptacle 111 and channel 112 of the second column heater socket 100B are also made longer to accommodate the longer chromatography column 211 of the second column heater cartridge 200B. Otherwise, the column heater cartridges 200A, 200B and sockets 100A, 100B are provided as described above. Both of the column heater sockets 100A, 100B can be interchangeably attached to the column heater base 300 as described above.

Turning to Figure 6, a schematic illustration of the HPLC-MS system 500 is shown. The HPLC-MS system 500 comprises the mass spectrometer 510 with an electrospray interface 511. At this interface, the emitter end 215 of the column heater assembly 400 (as described in Fig. 1) is positioned and aligned via adjustment of the third attachment portion 340 of the column heater base 300. The system 500 further comprises a sample injector 520, such as an autosampler, connected to the inlet 217 of the column emitter unit 210 via the first fitting 213.

### LIST OF ITEMS

The following is a list of items relating to various aspects and embodiments of the present disclosure.
1. A column heater socket for use with a column heater cartridge according to any one of items 14-25 in a high-performance liquid chromatography-mass spectrometry, HPLC-MS, system, the column heater socket comprising:
   - a heating device configured for heating the chromatography column of the column heater cartridge, the heating device including:
      ∘ a receptacle comprising, preferably consisting essentially of, a first material and comprising a channel configured for receiving at least the chromatography column of the column emitter unit, the first material being a thermal conductor; and
      ∘ a heater arranged in thermal connection with the receptacle, so that when the heater heats the first material of the receptacle, the receptacle distributes heat from the heater to the chromatography column.
2. A column heater socket according to item 1 comprising a first attachment portion configured to cooperate with the first attachment portion of the column heater cartridge to establish a detachable socket-cartridge attachment, wherein, when the detachable socket-cartridge attachment is established, at least the chromatography column of the column emitter unit is received in the channel of the receptacle.
3. A column heater socket according to item 2, wherein the detachable socket-cartridge attachment is configured to be established by arranging the column heater cartridge on the column heater socket in a transverse direction, e.g. a perpendicular direction, to the column axis of the column heater cartridge.
4. A column heater socket according to any one of the previous items comprising a second attachment portion configured for being attached to a mass spectrometer of the HPLC-MS-system or, preferably, cooperating with the second attachment portion of a column heater base according to any one of items 26-29 to establish a socket-base attachment, preferably a detachable attachment.
5. A column heater socket according to any one of the previous items, wherein the channel is further configured for receiving the first fitting of the column heater cartridge.
6. A column heater socket according to any one of the previous items, wherein the first material has a thermal conductivity of at least 0.35 W m⁻¹ K⁻¹ @ 25C° and an electrical resistivity of at least 10³Ω·m.
7. A column heater socket according to any one of the previous items, wherein the first material is a composite material, such as a material comprising one or more polymer constituents and a macroscopically identifiable filler constituent.
8. A column heater socket according to any one of the previous items further comprising a frame supporting the heating device, wherein the frame is configured for cooperating with the housing of the column heater cartridge to shield, preferably electrically, the voltage source and the column emitter unit from the exterior.
9. A column heater socket according to any one of the previous items, wherein the frame comprises:
   - a first frame part supporting the heating device; and
   - a second frame part including:
      ∘ the second attachment portion,
      ∘ optionally a circuit, e.g. a printed circuit board, and
      ∘ a first electrical interface portion configured for cooperating with the first electrical interface portion of the column heater base;
   wherein the first frame part and second frame part are detachably attached.
10. A column heater socket according to any one of the previous items, wherein the receptacle is permanently affixed to the column heater socket.
11. A column heater socket according to any one of the previous items, wherein the receptacle is integrally manufactured of the first material.
12. A column heater socket according to anyone of items 1-11, wherein the receptacle is additively manufactured of the first material.
13. A column heater socket according to any one of the previous items, wherein the heating device comprises a temperature sensor configured for, when the chromatography column is received in the channel, sensing a temperature of the chromatography column, and wherein the heating device is configured for maintaining the chromatography column within a predefined temperature range based on the sensed temperature of the temperature sensor.
14. A column heater cartridge for use with a column heater socket according to any one of the previous items in a high-performance liquid chromatography-mass spectrometry, HPLC-MS, system, the column heater cartridge comprising:
   - a column emitter unit extending along a column axis and including:
      ∘ a chromatography column, preferably a single chromatography column, with an inlet for receiving eluent; and
      ∘ an electrospray emitter comprising an emitter end for emitting ionised eluates; and
   - a voltage source configured for applying an electrospray voltage to the electrospray emitter;
   wherein the emitter end of the electrospray emitter is configured for being arranged at an electrospray interface of the HPLC-MS system, wherein the chromatography column and the electrospray emitter are in direct communication so that, during operation of the HPLC-MS system, eluates from the chromatography column are emitted from the emitter end of the electrospray emitter at the electrospray interface.
15. A column heater cartridge according to item 14 comprising a first attachment portion configured to cooperate with the first attachment portion of the column heater socket to establish a socket-cartridge attachment, preferably a detachable attachment.
16. A column heater cartridge according to any one of items 14-15, wherein the column emitter unit comprises a first fitting attached to the inlet of the chromatography column, wherein the first fitting is electrically conductive, preferably the first fitting comprises a metallic material, and wherein the voltage source configured for applying the electrospray voltage to the electrospray emitter via the first fitting.
17. A column heater cartridge according to anyone of items 14-16, wherein the voltage source comprises a high voltage pin arranged in electrical connection with the electrospray emitter, preferably via the first fitting.
18. A column heater cartridge according to anyone of items 14-17 comprising a housing including:
   - the column emitter unit; and
   - a cavity configured for receiving the receptacle of the column heater socket;
   wherein the column emitter unit is supported by the housing and extends through the cavity along the column axis, wherein the emitter end of the electrospray emitter extends beyond the housing.
19. A column heater cartridge according to item 18, wherein the housing comprises, or consists essentially of, a second material different from the first material, the second material preferably being a polyamide, such as PA12.
20. A column heater cartridge according to item 19, wherein the second material is an electrical insulator, preferably having an electrical resistivity of at least 10⁹ Ω·m, and/or a thermal insulator, preferably having a thermal conductivity of at most 0.40 W m⁻¹ K⁻¹ @ 25C°.
21. A column heater cartridge according to anyone of items 18-20, wherein the housing comprises a first housing part and a second housing part, wherein the first housing part is attached, preferably detachably, and more preferably as a fastened detachable attachment requiring a tool for attachment and/or detachment, to the second housing part and thereby securing the column emitter unit, preferably the first fitting, to the housing.
22. A column heater cartridge according to any one of items 18-21, wherein the housing comprises a support portion supporting a tip portion of the column emitter unit adjacent to the emitter end of the electrospray emitter.
23. A column heater cartridge according to anyone of items 14-23, wherein the chromatography column and the electrospray emitter form part of an integrated emitter column.
24. A column heater cartridge according to any one of items 14-24, comprising a readable memory unit configured for storing identification information related to the column emitter unit, preferably wherein the identification information uniquely distinguishes the column emitter unit from another column emitter unit.
25. A column heater cartridge according to item 24, wherein the memory unit is configured to store usage information associated with the column emitter unit, and wherein the memory unit is preferably writable to update the stored usage information over time.
26. A column heater base for use with a column heater socket according to any one of items 1-13 and a column heater cartridge according to any one of items 14-25 in a high-performance liquid chromatography-mass spectrometry, HPLC-MS, system, comprising:
   - a second attachment portion configured to couple with the second attachment portion of the column heater socket to establish a socket-base attachment; and
   - a third attachment portion configured for attaching, optionally via a fastener connection, the column heater base to a mass spectrometer of the HPLC-MS system.
27. A column heater base according to item 26, wherein the column heater socket-base attachment is a detachable attachment, such as the second attachment portion of the column heater base being one of a receiving section and an insertion section, and the second attachment portion of the column heater socket being the other one of the receiving section and the insertion section.
28. A column heater base according any one of items 26-27 further comprising a first electrical interface portion configured to cooperate with the first electrical interface portion of the column heater socket to establish an electrical connection when the column heater socket-base attachment is established, wherein the electrical connection is configured to transfer power to/from the heating device, and/or configured to transfer data to/from the memory unit and/or circuit.
29. A column heater base according to item 28, wherein the electrical connection is further configured for, when the column heater socket-cartridge attachment is additionally established, supplying the voltage source of the column heater cartridge.
30. A column heater assembly for use in a high-performance liquid chromatography-mass spectrometry, HPLC-MS, system, comprising:
   - a column heater socket according to any one of items 1-13; and
   - a column heater cartridge according to any one of items 14-25.
31. A column heater assembly according to item 30 further comprising a column heater base according to any one of items 26-29.
32. A kit of parts for use in a high-performance liquid chromatography-mass spectrometry, HPLC-MS, system, the kit of parts comprising:
   - a plurality of column heater cartridges according to any one of items 14-25 including at least a first column heater cartridge and a second column heater cartridge, wherein the column emitter unit of the first column heater cartridge is different from the column emitter unit of the second column heater cartridge, and preferably wherein the chromatography column of the first column heater cartridge is different from the chromatography column of the second column heater cartridge.
33. A kit of parts according to item 32 comprising a column heater socket according to any one of items 1-13, wherein the first attachment portion of each one of the plurality of column heater cartridges is configured to interchangeably establish the column heater socket-cartridge attachment.
34. A kit of parts comprising one or more column heater bases according to any one of items 26-29.
35. A high-performance liquid chromatography-mass spectrometry, HPLC-MS, system, comprising:
   - a column heater assembly according to any one of items 30-31; and
   - a mass spectrometer having an electrospray interface;
   wherein an emitter end of the electrospray emitter is arranged at the electrospray interface of the mass spectrometer.
36. A HPLC-MS system according to item 35, further comprising a sample injector, such as an autosampler, connected to the inlet of the chromatography column, optionally via the first fitting.

### LIST OF REFERENCES

| | | | |
|---|---|---|---|
| 100 | column heater socket | 331 | groove |
| 110 | heating device | 333 | first electrical interface portion |
| 111 | receptacle | 340 | third attachment portion |
| 112 | channel | 350 | power/data cable |
| 113 | column portion | 400 | column heater assembly |
| 114 | fitting portion | 410 | socket-cartridge attachment |
| 115 | intermediate portion | 420 | socket-base attachment |
| 116 | end portion | 500 | HPLC-MS system |
| 120 | first attachment portion | 510 | mass spectrometer |
| 121 | second electrical interface portion | 511 | electrospray interface |
| 122 | means for reading/writing | 520 | sample injector |
| 130 | second attachment portion | 600 | kit of parts |
| 133 | first electrical interface portion | | |
| 140 | frame | | |
| 141 | first frame part | | |
| 142 | second frame part | | |
| 200 | column heater cartridge | | |
| 210 | column emitter unit | | |
| 211 | chromatography column | | |
| 212 | electrospray emitter | | |
| 213 | first fitting | | |
| 214 | column axis | | |
| 215 | emitter end | | |
| 216 | tip portion | | |
| 217 | inlet | | |
| 220 | first attachment portion | | |
| 221 | voltage source | | |
| 222 | memory unit | | |
| 230 | housing | | |
| 231 | cavity | | |
| 232 | support portion | | |
| 233 | first housing part | | |
| 234 | second housing part | | |
| 235 | detachable attachment | | |
| 300 | column heater base | | |
| 330 | second attachment portion | | |

## Claims

1. A column heater socket for use with a column heater cartridge according to any one of claims 7-10 in a high-performance liquid chromatography-mass spectrometry, HPLC-MS, system, the column heater socket comprising:
- a heating device configured for heating the chromatography column of the column heater cartridge, the heating device including:
∘ a receptacle comprising, preferably consisting essentially of, a first material, the receptacle including a channel configured for receiving at least the chromatography column of the column emitter unit, the first material being a thermal conductor; and
∘ a heater arranged in thermal connection with the receptacle, so that when the heater heats the first material of the receptacle, the receptacle distributes heat from the heater to the chromatography column.
∘

2. A column heater socket according to claim 1 comprising a first attachment portion configured to cooperate with the first attachment portion of the column heater cartridge to establish a detachable socket-cartridge attachment, wherein, when the detachable socket-cartridge attachment is established, at least the chromatography column of the column emitter unit is received in the channel of the receptacle, wherein the detachable socket-cartridge attachment is preferably configured to be established by arranging the column heater cartridge on the column heater socket in a transverse direction, e.g. a perpendicular direction, to the column axis of the column heater cartridge.

3. A column heater socket according to any one of the previous claims comprising a second attachment portion configured for being attached to a mass spectrometer of the HPLC-MS-system or, preferably, cooperating with the second attachment portion of a column heater base according to any one of claims 11-12 to establish a socket-base attachment, preferably a detachable attachment.

4. A column heater socket according to any one of the previous claims, wherein the channel is further configured for receiving the first fitting of the column heater cartridge.

5. A column heater socket according to any one of the previous claims, wherein first material has a thermal conductivity of at least 0.35 W m⁻¹ K⁻¹ @ 25C° and an electrical resistivity of at least 10³ Ω·m, preferably at least 10⁹ Ω·m.

6. A column heater socket according to any one of the previous claims, wherein the receptacle is integrally manufactured, preferably using additive manufacturing, of the first material.

7. A column heater cartridge for use with a column heater socket according to any one of the previous claims in a high-performance liquid chromatography-mass spectrometry, HPLC-MS, system, the column heater cartridge comprising:
- a column emitter unit extending along a column axis and including:
∘ a chromatography column, preferably a single chromatography column, with an inlet for receiving eluent; and
∘ an electrospray emitter comprising an emitter end for emitting ionised eluates; and
- a voltage source configured for applying an electrospray voltage to the electrospray emitter;
wherein the emitter end of the electrospray emitter is configured for being arranged at an electrospray interface of the HPLC-MS system, wherein the chromatography column and the electrospray emitter are in direct communication so that, during operation of the HPLC-MS system, eluates from the chromatography column are emitted from the emitter end of the electrospray emitter at the electrospray interface.

8. A column heater cartridge according to claim 7, wherein the column emitter unit comprises a first fitting attached to the inlet of the chromatography column, wherein the first fitting is electrically conductive, preferably the first fitting comprising a metallic material, and wherein the voltage source is configured for applying the electrospray voltage to the electrospray emitter via the first fitting.

9. A column heater cartridge according to anyone of claims 7-8 comprising a housing including:
- the column emitter unit; and
- a cavity configured for receiving the receptacle of the column heater socket;
wherein the column emitter unit is supported by the housing and extends through the cavity along the column axis, wherein the emitter end of the electrospray emitter extends beyond the housing, wherein the housing comprises, or consists essentially of, a second material different from the first material.

10. A column heater cartridge according to any one of claims 7-9, comprising a readable memory unit configured for storing identification information related to the column emitter unit, preferably wherein the identification information uniquely distinguishes the column emitter unit from another column emitter unit, wherein the memory unit preferably is configured to store usage information associated with the column emitter unit, and wherein the memory unit is preferably writable to update the stored usage information over time.

11. A column heater base for use with a column heater socket according to any one of claims 1-6 and a column heater cartridge according to any one of claims 7-10 in a high-performance liquid chromatography-mass spectrometry, HPLC-MS, system, comprising:
- a second attachment portion configured to couple with the second attachment portion of the column heater socket to establish a socket-base attachment; and
- a third attachment portion configured for attaching, optionally via a fastener connection, the column heater base to a mass spectrometer of the HPLC-MS system;
wherein the column heater socket-base attachment is a detachable attachment, such as the second attachment portion of the column heater base being one of a receiving section and an insertion section, and the second attachment portion of the column heater socket being the other one of the receiving section and the insertion section.

12. A column heater base according to claim 11 further comprising a first electrical interface portion configured to cooperate with the first electrical interface portion of the column heater socket to establish an electrical connection when the column heater socket-base attachment is established, wherein the electrical connection is configured to transfer power to/from the heating device, and/or configured to transfer data to/from the memory unit and/or circuit, wherein the electrical connection is further configured for, when the column heater socket-cartridge attachment is additionally established, supplying the voltage source of the column heater cartridge.

13. A column heater assembly for use in a high-performance liquid chromatography-mass spectrometry, HPLC-MS, system, comprising:
- a column heater socket according to any one of claims 1-6;
- a column heater cartridge according to any one of claims 7-10; and
- optionally a column heater base according to any one of claims 11-12.

14. A kit of parts for use in a high-performance liquid chromatography-mass spectrometry, HPLC-MS, system, the kit of parts comprising:
- a plurality of column heater cartridges according to any one of claims 7-10 including at least a first column heater cartridge and a second column heater cartridge, wherein the column emitter unit of the first column heater cartridge is different from the column emitter unit of the second column heater cartridge, and preferably wherein the chromatography column of the first column heater cartridge is different from the chromatography column of the second column heater cartridge;
- optionally a column heater socket according to any one of claims 1-6; and
- optionally one or more column heater bases according to any one of claims 11-12;
wherein the first attachment portion of each one of the plurality of column heater cartridges is configured to interchangeably establish the column heater socket-cartridge attachment.

15. A high-performance liquid chromatography-mass spectrometry, HPLC-MS, system, comprising:
- a column heater assembly according to claim 13;
- a mass spectrometer having an electrospray interface; and
- optionally, a sample injector, such as an autosampler, connected to the inlet of the chromatography column, optionally via the first fitting.
wherein an emitter end of the electrospray emitter is arranged at the electrospray interface of the mass spectrometer.
